# EUROPÄISCHE PATENTSCHRIFT

(11) **EP 3 500 800 B1**
(45) Veröffentlichungstag und Bekanntmachung des Hinweises auf die Patenterteilung: **11.11.2020**
(21) Anmeldenummer: 17746125.8
(22) Anmeldetag: 01.08.2017
(51) Int. Cl.: F24C 15/32

(54) **HAUSHALTSGARGERÄT**
HOUSEHOLD COOKING APPLIANCE
APPAREIL DE CUISSON DOMESTIQUE

(30) Priorität: 19.08.2016 DE 102016215650
(43) Veröffentlichungstag der Anmeldung: 26.06.2019
(73) Patentinhaber: BSH Hausgeräte GmbH, 81739 München (DE)
(72) Erfinder: LEGO, Dieter, 76137 Karlsruhe (DE); NAGEL, Martin, 67580 Forstheim (FR); DIEDERICHS, Stefan, 75447 Sternenfels (DE); WOLF, Hanna, 74589 Satteldorf (DE)
(86) Internationale Anmeldenummer: PCT/EP2017/069455
(87) Internationale Veröffentlichungsnummer: WO 2018/033384

(56) Entgegenhaltungen:
- WO-A1-2014/180760
- DE-A1-102005 059 505
- DE-U1-202004 015 290

## Beschreibung

Die Erfindung betrifft ein Haushaltsgargerät, das einen Garraum, einen außerhalb des Garraums befindlichen Dampferzeuger, der über eine Dampfzuführleitung mit dem Garraum verbunden ist und eine zu dem Garraum führende Frischluftleitung, die mittels eines Absperrelements absperrbar ist, aufweist. Die Erfindung ist insbesondere vorteilhaft anwendbar auf Backöfen mit einer Dampfzuführfunktion.

WO 2014/180760 A1 offenbart ein Dampfgargerät. Das Dampfgargerät weist einen Garraum mit einer Garraum-Durchlassöffnung und ein mit der Garraum-Durchlassöffnung verbundenes Ventil auf, wobei das Ventil ein Dreiwegeventil mit drei Toren ist, dessen erstes, durchflussoffenes Tor an der Garraum-Durchlassöffnung angeschlossen ist, dessen zweites, durchflussvariables Tor zu einer Umgebung des Garraums offen ist und dessen drittes, durchflussvariables Tor an mindestens ein Absperrventil angeschlossen ist.

WO 2012/140003 A1 offenbart ein Dampfgargerät, insbesondere Dampfbackofen, mit einem Garraum, der in mindestens einer der Seitenwände mindestens eine Überlauföffnung aufweist, die mit einer Überlaufleitung, die sich in einen Überlaufablauf und ein Dampfablassrohr verzweigt, verbunden ist und an dem Dampfablassrohr mindestens ein Dampfventil vorgesehen ist, mittels dessen zumindest zeitweise der Querschnitt des Dampfablassrohres verändert werden kann.

In DE 102 45 773 C1 wird eine Vorrichtung zur Wärmebehandlung von Lebensmitteln angegeben, mit einem Gehäuse, in dem eine Gerätezuluftöffnung und eine Geräteabluftöffnung vorgesehen ist, wobei innerhalb des Gehäuses ein beheizbarer Garraum vorgesehen ist, der eine Garraumzuluftöffnung und eine Garraumabluftöffnung aufweist, wobei ein Ventil zur Steuerung der Zu- und Abluft des Garraums vorgesehen ist. Das Ventil verbindet in einer Bypassstellung die Garraumabluftöffnung mit der Garraumzuluftöffnung und die Gerätezuluftöffnung mit der Geräteabluftöffnung. In der Bypassstellung erfolgt also lediglich eine Umwälzung der Garraumatmosphäre im Umluftbetrieb. Das Ventil lässt sich ferner auf Durchluftbetrieb umstellen, in dem Zuluft aus der Gerätezuluftöffnung in den Garraum zugeführt wird und Abluft über die Garraumabluftöffnung zur Geräteabluftöffnung austritt.

EP 0 319 673 A1 offenbart, dass bei einem mit Dampf betriebenen Gargerät gegen Ende der Garphase über eine steuerbare Dampfaustrittsöffnung aus dem Garraum Dampf zur Saugseite eines Gebläses abgeführt und gleichzeitig über eine steuerbare Luftzuführungsöffnung aus dem Druckkanal des Gebläses Luft dem Garraum zugeführt wird. Auf diese Weise wird der in dem Garraum befindliche Dampf so weit abgebaut, dass beim Öffnen der Backofentür kein störender Dampf mehr austritt.

Bei den obigen Vorrichtungen des Standes der Technik ist es nachteilig, dass die Zufuhr von Frischluft konstruktiv vergleichsweise aufwändig ist.

Es ist die Aufgabe der vorliegenden Erfindung, die Nachteile des Standes der Technik zumindest teilweise zu überwinden und insbesondere eine verbesserte Möglichkeit zur Absenkung einer absoluten Feuchte und/oder einer relativen Feuchte bereitzustellen, z.B. während eines Speisenbehandlungsbetriebs, insbesondere Dampfbehandlungsbetriebs, und/oder danach.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Haushaltsgargerät, aufweisend einen Garraum, einen außerhalb des Garraums befindlichen Dampferzeuger, der über eine Dampfzuführleitung mit dem Garraum verbunden ist und eine zu dem Garraum führende Frischluftleitung, die mittels eines Absperrelements absperrbar ist, wobei die Dampfzuführleitung und die Frischluftleitung einen gemeinsamen, in den Garraum mündenden Endabschnitt aufweisen.

Dieses Haushaltsgargerät weist den Vorteil auf, dass es einen besonders kompakten Aufbau ermöglicht. Durch die gezielte Zufuhr von Frischluft lässt sich eine Verbesserung der Regelbarkeit der Feuchte im Garraum umsetzen. Dies ist besonders vorteilhaft zur Verbesserung von Behandlungsergebnissen von Speisen bei Betriebsarten, bei denen ein Trocknungsprozess im Vordergrund steht bzw. viel Feuchtigkeit von den Speisen abgeführt werden soll. Beispielsweise kann so eine Betriebsart "Dörren" merklich verbessert werden. Darüber hinaus kann eine gezielte schnelle Verringerung einer Garraumtemperatur erreicht werden, was eine Speisenbehandlung verbessern kann und eine Behandlungszeit verringern kann. Besonders mit Automatikprogrammen lassen sich so noch bessere Behandlungsergebnisse erzielen. Auch kann mittels des Haushaltsgargeräts eine verbesserte (stärkere und/oder schnellere) Trocknung des Garraums als solchem erreicht werden, was eine Korrosion von dem Garraum ausgesetzten Komponenten verringert. Außerdem kann - falls vorhanden - eine Ausgestaltung eines Wrasenabzugs (z.B. einer zugehörigen Wrasenklappe) vereinfacht werden.

Das Haushaltsgargerät kann eine Backofenfunktionalität aufweisen bzw. ein Backofen sein. Der Garraum kann dann als ein Ofenraum genutzt werden oder ein Ofenraum sein. Der Garraum kann z.B. mittels einer oder mehrerer elektrischer Heizungen heizbar sein.

Mittels des Dampferzeugers oder Verdampfers kann in dem Garraum befindliche Speise behandelt werden, und zwar ohne zusätzliche Wärmezufuhr und/oder mit zusätzlicher Wärmezufuhr (Dampfgaren). Das Haushaltsgargerät weist also eine Dampfzufuhrfunktionalität auf, bei zusätzlicher Wärmezufuhr auch eine Dampfgarfunktionalität.

Das Haushaltsgargerät kann ferner eine Mikrowellenfunktionalität aufweisen.

Das Haushaltsgargerät kann mindestens einen Temperatursensor zum Bestimmen einer Garraumtemperatur und/oder mindestens einen Feuchtesensor zum Bestimmen einer Feuchtigkeit in dem Garraum aufweisen. Der mindestens eine Sensor kann mit einer Steuereinrichtung gekoppelt sein, die auch dazu vorgesehen ist, den Dampferzeuger zu steuern, insbesondere anzuschalten und auszuschalten. So kann eine Dampfzufuhr und/oder Frischluftzufuhr in den Garraum besonders genau temperaturabhängig und/oder feuchtigkeitsabhängig durchgeführt werden, z.B. während eines Ablaufs eines Automatikprogramms.

Der Dampferzeuger kann ein Boiler oder ein Durchlauferhitzer sein. Die Dampfzuführleitung kann einerseits mit einer Dampfauslassöffnung des Dampferzeugers verbunden sein und andererseits (mit dem Endabschnitt) in den Garraum münden.

Die Frischluftleitung mündet in einen Raumbereich außerhalb des Garraums, z.B. in einen Raumbereich innerhalb eines Gehäuses des Haushaltsgargeräts oder in eine Öffnung in dem Gehäuse, und einerseits (mit dem Endabschnitt) in dem Garraum.

Dass die Dampfzuführleitung und die Frischluftleitung einen gemeinsamen, in den Garraum mündenden Endabschnitt aufweisen, kann auch so gesehen werden, dass Frischluft zumindest abschnittsweise durch die Dampfzuführleitung in den Garraum einführbar (d.h., einblasbar oder einsaugbar) ist oder Dampf zumindest abschnittsweise durch die Frischluftleitung in den Garraum einführbar (d.h., einblasbar oder einsaugbar) ist.

Es ist eine Ausgestaltung, dass der Garraum einen von der Dampfzuführleitung und von der Frischluftleitung durch den Garraum getrennten Wrasenabzug aufweist. Dieser kann zum Auslass von Wrasen und/oder Frischluft aus dem Garraum verwendet werden. Der Wrasenabzug kann einen Wrasenlüfter aufweisen.

Es ist zudem eine Ausgestaltung, dass das Haushaltsgargerät kein Gebläse zum Bewegen von Medien in der Frischluftleitung aufweist, die Frischluftleitung also gebläselos ist. Dies ermöglicht eine besonders preiswerte und kompakte Bauform. Die Frischluft kann beispielsweise dadurch in den Garraum gesaugt werden, dass Wrasen (einschließlich Dampf) aus dem Garraum austritt, z.B. durch einen geöffneten Wrasenabzug, ggf. bei laufendem Wrasenlüfter. Dadurch entsteht im Garraum ein Unterdruck, der mittels durch die Frischluftleitung strömender Frischluft ausgleichbar ist. Dies ist besonders vorteilhaft bei einem vollabgedichteten Garraum (z.B. einem "Fullsteam"-Dampfbackofen) mit einem gebläselosen Wrasenabzug. Jedoch wird eine Verringerung des Feuchtegehalts auch bei Verwendung eines nicht abgedichteten Gerät (z.B. eines "Added Steam"-Dampfbackofen), bei dem durch vorhandene Undichtigkeiten (wie Buchsen, Motorachsendurchführung, usw.) Frischluft in geringem Maße nachströmen kann, wesentlich beschleunigt.

Es ist noch eine Ausgestaltung, dass das Haushaltsgargerät ein Gebläse zum Bewegen von Medien in der Frischluftleitung aufweist. So kann eine Frischluftzufuhr erheblich verstärkt werden. Dadurch wiederum kann z.B. eine Feuchtereduktion und/oder Temperaturverringerung in dem Garraum erheblich beschleunigt werden. Es ist eine Weiterbildung, dass eine Drehzahl des Gebläses zur Einstellung eines Volumenstroms der Frischluft variierbar ist.

Es ist eine weitere Ausgestaltung, dass das Gebläse bzw. der Lüfter in einer ersten Drehrichtung drehbar ist, um das in der Frischluftleitung befindliche Medium in den Garraum einzubringen (d.h., zu blasen oder zu saugen) und in einer zweiten Drehrichtung drehbar ist, um in dem Garraum befindliches Medium durch die Frischluftleitung auszubringen (d.h., umgekehrt zu saugen oder zu blasen). Dadurch wird auf besonders einfache und preiswerte Weise eine gezielte Zufuhr von Frischluft in den Garraum und Abfuhr von Wrasen (einschließlich Dampf) oder Heißluft aus dem Garraum durch die gleiche Leitung ermöglicht. So kann z.B. auf einen eigenständigen Wrasenabzug verzichtet werden.

Es ist noch eine weitere Ausgestaltung, dass das Gebläse ein in dem Garraum befindliches Umluftgebläse ist. Dies hat den Vorteil, dass kein gesondertes Gebläse bzw. kein gesonderter Lüfter zum Bewegen von Medium in der Frischluftleitung vorgesehen zu werden braucht. Das Umluftgebläse kann dazu verwendet werden, Luft in dem Garraum umzuwälzen. Das Umluftgebläse kann einen Teil einer Umluftheizung darstellen, insbesondere zusammen mit einem das Umluftgebläse radial umgebenden Ringheizkörper.

Es ist auch noch eine weitere Ausgestaltung, dass eine Drehzahl des Gebläses zur Steuerung und/oder Regelung eines Volumenstroms von durch die Frischluftleitung bewegtem gasförmigen Mediums variierbar ist. Dies ermöglicht eine noch feinere Anpassung eines Speisenbehandlungsvorgangs.

Das Umluftgebläse bzw. die Umluftheizung können hinter einer Prallwand angeordnet sein, insbesondere zwischen der Prallwand und einer Rückseite einer Garraumwandung oder Muffel.

Es ist ferner eine Ausgestaltung, dass der Endabschnitt bei Frontansicht in den Garraum hinter dem Umluftgebläse in den Garraum mündet. Dort ist eine Sogwirkung oder Druckwirkung auf die Mündung des Endabschnitts in den Garraum besonders hoch, so dass das in der Frischluftleitung befindliche Medium durch Drehung des Umluftgebläses besonders stark bewegbar ist.

Es ist ferner eine Ausgestaltung, dass das Gebläse ein sich außerhalb des Garraums befindliches Gebläse oder Lüfter ("Kühlgebläse") ist. Dies hat den Vorteil, dass eine besonders starke Bewegung des in der Frischluftleitung befindlichen Mediums ermöglicht wird. Zudem kann ein solches Kühlgebläse besonders vielgestaltig an das Bewegen des Mediums in der Frischluftleitung angepasst werden.

Das Kühlgebläse kann ein gezielt, insbesondere ausschließlich, zum Bewegen des in der Frischluftleitung befindlichen Mediums vorgesehenes Gebläse sein.

Alternativ kann das Kühlgebläse ein bereits zum Kühlen anderer Komponenten des Haushaltsgargeräts vorhandenes Gebläse sein, beispielsweise ein Gebläse zum Kühlen elektronischer Komponenten und/oder zum Kühlen einer Garraumtür. Dies ergibt den Vorteil, dass kein gesondertes Gebläse bzw. kein gesonderter Lüfter zum Bewegen von Medium in der Frischluftleitung vorgesehen zu werden braucht.

Es ist außerdem eine Ausgestaltung, dass das Absperrelement ein Frischluft-Absperrelement ist, also nicht zum Absperren des Dampferzeugers gegen den Garraum eingerichtet oder angeordnet ist. Dabei kann sich der Endabschnitt zwischen dem Frischluft-Absperrelement und dem Garraum befinden. Das Frischluft-Absperrelement ist also kein Element der Dampfzuführung, sondern nur der Frischluftleitung. Dies ermöglicht einen besonders preiswerten Aufbau.

Es ist eine Weiterbildung, dass die Dampfzuführungsleitung bezüglich des Garraums permanent offen ist, also nicht mittels eines (weiteren) Absperrelements ("Dampf-Absperrelement) verschließbar ist. Dies ermöglicht einen besonders preiswerten Aufbau.

Es ist eine andere Weiterbildung, dass die Dampfzuführungsleitung mittels eines Dampf-Absperrelements verschließbar ist, insbesondere so, dass sich der Endabschnitt zwischen diesem Dampf-Absperrelement und dem Garraum befindet. Das Dampf-Absperrelement kann nur die gastechnische Verbindung zwischen dem Dampferzeuger und dem Garraum sperren, aber nicht die die gastechnische Verbindung zwischen der Frischluftleitung und dem Garraum. Dadurch kann der Garraum besonders flexibel mit Frischluft und/oder Dampf beaufschlagt werden.

Es ist auch eine Ausgestaltung, dass der Dampferzeuger mit der Frischluftleitung gastechnisch verbindbar ist. Dadurch kann - insbesondere bei ausgeschaltetem oder deaktiviertem Dampferzeuger - Frischluft auch in den Dampferzeuger eingeblasen werden. Dies ergibt den Vorteil, dass der Dampferzeuger und die Dampfzuführleitung mittels der Frischluft getrocknet werden können, was eine Lebensdauer erhöht und einen Verbleib "alten" Wassers verringert oder sogar ganz unterbindet. Dies ist besonders effektiv durchführbar, falls das Medium in der Frischluftleitung, einschließlich des gemeinsamen Endabschnitts, mittels eines Gebläses bewegbar ist. Eine besonders effektive Trocknung ergibt sich, falls stehendes Wasser aus dem Dampferzeuger entfernbar ist, z.B. über einen steuerbaren Ablauf.

Es ist auch noch eine Ausgestaltung, dass mittels des Absperrelements wahlweise die Dampfzuführleitung oder die Frischluftleitung (außerhalb des gemeinsamen Endabschnitts) absperrbar sind. Dies ermöglicht auf besonders einfache Weise eine abwechselnde oder wahlweise Beschickung des Garraums mit Frischluft oder Dampf.

Es ist auch noch eine Ausgestaltung, dass das Absperrelement ein elektrisch schaltbares Absperrelement ist, z.B. ein Elektromagnetventil. Es kann z.B. mittels einer Steuereinrichtung schaltbar sein. So lässt sich eine besonders vielfältige und frei wählbare Einbringung von Frischluft in den Garraum steuern. Alternativ oder zusätzlich lässt sich so die Einbringung von gasförmigem Medium (z.B. Frischluft) in den Garraum oder aus dem Garraum heraus (z.B. dessen Volumenstrom) regeln, beispielsweise falls ein Feuchtesensor im Garraum vorhanden ist.

Es ist eine alternative Weiterbildung, dass das Absperrelement ein physikalisch schaltendes Absperrelement ist, z.B. ein temperaturabhängig schaltendes Absperrelement oder ein feuchtigkeitsabhängig schaltendes Absperrelement. Das physikalisch schaltende Absperrelement kann ein Dehnstoffelement aufweisen bzw. ein Dehnstoff-Absperrelement sein. Das Dehnstoff-Absperrelement kann einen Wachsaktuator, einen Ölaktuator o.ä. aufweisen.

Es ist zudem noch eine Ausgestaltung, dass der Endabschnitt als ein Stutzen eines T-Stücks ausgebildet ist. Dadurch lässt sich eine Verzweigung des gemeinsamen Endabschnitts einerseits zu einer der Mündung des Garraums abgewandten Öffnung ("Frischluftzuführöffnung") der Frischluftleitung und andererseits zu dem Dampferzeuger auf besonders einfache Weise erreichen.

Es ist zudem noch eine Ausgestaltung, dass das Haushaltsgargerät dazu eingerichtet ist, nach einem Garvorgang automatisch Frischluft in den Garraum einzubringen. So kann eine Türöffnung komfortabler gestaltet werden, da so vorher durch die Frischluft Wrasen und/oder Dampf zumindest teilweise aus dem Garraum herausgedrückt worden sind. Diese Ausgestaltung ist besonders vorteilhaft, wenn zuvor Dampf in den Garraum eingebracht worden ist. Falls die Speisenbehandlung im Rahmen eines Automatikprogramms durchgeführt wurde, wird in einer Weiterbildung ein Signal zu Beendigung des Programms erst nach Einbringung von Frischluft in den Garraum an einen Nutzer ausgegeben. Eine Dauer der Frischluftzufuhr kann zeitgesteuert sein (z.B. über einem Timer), temperaturbestimmt sein (z.B. mit Erreichen eines Temperaturschwellwerts) und/oder feuchtigkeitsbestimmt sein (z.B. mit Erreichen eines Feuchtigkeitsschwellwerts).

Dass das Haushaltsgargerät dazu eingerichtet ist, eine bestimmte Funktion durchzuführen, umfasst, dass es konkret in der Lage ist, diese Funktion auszuführen. Dies kann durch eine hardwaretechnische Ausgestaltung (z.B. ein Vorhandensein einer entsprechenden Steuereinrichtung, Sensorik usw.) und/oder durch eine softwaretechnische Ausgestaltung (z.B. eine entsprechende Programmierung beispielsweise einer Steuereinrichtung usw.) umgesetzt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Seitenansicht eine Skizze eines Haushaltsgargeräts gemäß einem ersten Ausführungsbeispiel;
- Fig.2: zeigt als Schnittdarstellung in Seitenansicht eine Skizze eines Haushaltsgargeräts gemäß einem zweiten Ausführungsbeispiel;
- Fig.3: zeigt als Schnittdarstellung in Seitenansicht eine Skizze eines Haushaltsgargeräts gemäß einem dritten Ausführungsbeispiel.

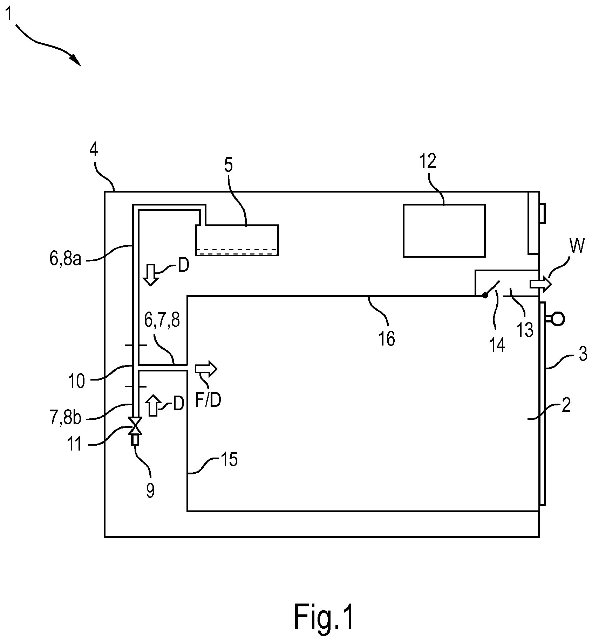

Fig.1 zeigt als Schnittdarstellung in Seitenansicht eine Skizze eines Haushaltsgargeräts 1 gemäß einem ersten Ausführungsbeispiel. Das Haushaltsgargerät 1 ist ein Backofen mit einer Dampfzufuhrfunktion und weist dazu einen frontseitig offenen Garraum 2 auf, dessen Beschickungsöffnung mittels einer Tür 3 verschließbar ist. Außerhalb des Garraums 2, aber innerhalb eines Gehäuses 4 befindet sich ein Dampferzeuger 5, hier in Form eines Boilers. Eine oberseitige Dampfauslassöffnung des Dampferzeugers 5 ist über eine Dampfzuführleitung 6 mit dem Garraum 2 verbunden. Das Haushaltsgargerät 1 weist ferner eine zu dem Garraum 2 führende bzw. in den Garraum 2 mündende Frischluftleitung 7 auf. Die Dampfzuführleitung 6 und die Frischluftleitung 7 weisen einen gemeinsamen Abschnitt ("Endabschnitt" 8) auf, der in den Garraum mündet. Ausgehend von dem Garraum 2 verläuft also zunächst der Endabschnitt 8 außerhalb des Garraums 2. Von diesen verzweigt ein erster Zweig 8a zu dem Dampferzeuger und ein zweiter Zweig 8b zu einer Öffnung ("Frischluftzuführöffnung" 9) der Frischluftleitung 7. Die Dampfzuführleitung 6 besteht also aus dem ersten Zweig 8a und dem Endabschnitt 8, während die Frischluftleitung 7 aus dem zweiten Zweig 8b und dem Endabschnitt 8 besteht.

Der Endabschnitt 8, ein an den Endabschnitt 8 anschließender Abschnitt des ersten Zweigs 8a und ein an den Endabschnitt 8 anschließender Abschnitt des zweiten Zweigs 8b sind hier als jeweilige Anschlüsse oder Stutzen eines T-Stücks 10 ausgebildet.

Die Frischluftleitung 7 ist hinter dem Endabschnitt 8 (d.h., zwischen dem Endabschnitt 8 und dem zweiten Zweig 8b bzw. in dem zweiten Zweig 8b) mit einem Frischluft-Absperrelement in Form eines Absperrventils 11 versehen. Mittels des Absperrventils 11 kann eine Verbindung zwischen der Frischluftzuführöffnung 9 und dem Garraum 2 unterbrochen werden, aber nicht zwischen dem Dampferzeuger 5 und dem Garraum 2. Dies ist gleichbedeutend mit der Ansicht, dass die Frischluftleitung 7 mittels des Absperrventils 11 absperrbar ist, die Dampfzuführleitung 6 jedoch gegen den Garraum 2 dauernd offen ist. Alternativ könnte auch die Dampfzuführleitung 6 individuell absperrbar sein. In noch einer Alternative könnten die Frischluftleitung 7 und die Dampfzuführleitung 6 z.B. wahlweise wechselseitig absperrbar sein.

Das Absperrventil 11 kann ein mittels einer Steuereinrichtung 12 elektrisch schaltbares Absperrventil sein. Die Steuereinrichtung 12 kann eine zentrale Steuereinrichtung des Haushaltsgargeräts 1 sein und z.B. dazu eingerichtet sein, Automatikprogramme oder nutzerseitig direkt eingegebene Betriebseinstellungen durchzuführen. Die Steuereinrichtung 12 kann dazu z.B. den Garraum 2 durch Ansteuerung elektrischer Heizkörper (z.B. eines Ringheizkörper einer Umluftheizung, mindestens eines Oberhitze- oder Grillheizkörpers, eines Unterhitzeheizkörpers usw.) aufheizen, den Dampferzeuger 5 ansteuern usw. Die Steuereinrichtung 12 kann mit einem oder mehreren Sensoren (o. Abb.) gekoppelt sein, z.B. mit einem Temperatursensor zum Abfühlen einer Garraumtemperatur, einem Feuchtigkeitssensor usw.

Die Frischluftleitung 7 ist gebläselos, d.h., dass kein Gebläse oder Lüfter vorhanden ist, das in der Lage ist, in der Frischluftleitung 7 befindliches gasförmiges Medium in merklichem Maße zu bewegen. Vielmehr kann dadurch Frischluft F durch die Frischluftzuführöffnung 9 über die Frischluftleitung 7 in den Garraum 2 gelangen, dass ein Wrasenabzug 13 geöffnet ist, durch den Wrasen aus dem Garraum 2 abziehen kann. Der austretende Wrasen W erzeugt einen Unterdruck in dem Garraum 2, mittels dessen die Frischluft F in den Garraum 2 gesaugt wird. Die durch die Frischluftleitung 7 nachströmende Frischluft sorgt also für einen Druckausgleich in dem Garraum 2. Ein Öffnen und Schließen des Wrasenabzugs 13 kann durch Öffnen bzw. Schließen einer Wrasenklappe 14 erfolgen. Ein Wrasenlüfter (o. Abb.) kann vorhanden sein.

Der Endabschnitt 8 kann insbesondere in eine Rückwand 15 der Garraumwandung oder Muffel münden, während der Wrasenabzug 13 vorzugsweise in eine Decke 16 der Garraumwandung mündet.

Bei Betrieb des Haushaltsgargeräts 1 kann z.B. in einem Aufheizabschnitt eines Speisenbehandlungsablaufs die Wrasenklappe 14 geschlossen sein, während der Garraum 2 aufgeheizt wird. Folgend kann der Dampferzeuger 5 aktiviert werden, um Dampf D zu erzeugen. Aufgrund des Dampfdrucks strömt der Dampf D durch die Dampfzuführleitung 6 in den Garraum 2. Das Absperrventil 11 ist geschlossen, um ein Austreten des Dampfs D und/oder von Wrasen W daraus zu verhindern.

Um den Dampf D während der Speisenbehandlung oder nach der Speisenbehandlung gezielt und schnell aus dem Garraum 2 wieder entfernen zu können, können die Wrasenklappe 14 und das Absperrventil 11 geöffnet werden. Dadurch wird heißer Wrasen W (ggf. einschließlich Dampf D) aus dem Garraum 2 entfernt und kühlere Frischluft F zugeführt. Diese Zuführung von Frischluft F kann auch in einem gesonderten Abschnitt nach einem Speisenbehandlungsabschnitt erfolgen. Ein solcher Frischluft-Abschnitt kann z.B. für eine vorgegebene Zeit durchgeführt werden. Das Zuführen der Frischluft F durch die Frischluftleitung 7 kann allgemein zum verbesserten Regeln einer Feuchtigkeit im Garraum, zum verbesserten Regeln einer Temperatur in dem Garraum, zum Entfernen des Dampfs D aus dem Garraum, zum schnelleren Abkühlen des Garraums (mit oder ohne Dampf D) usw. verwendet werden.

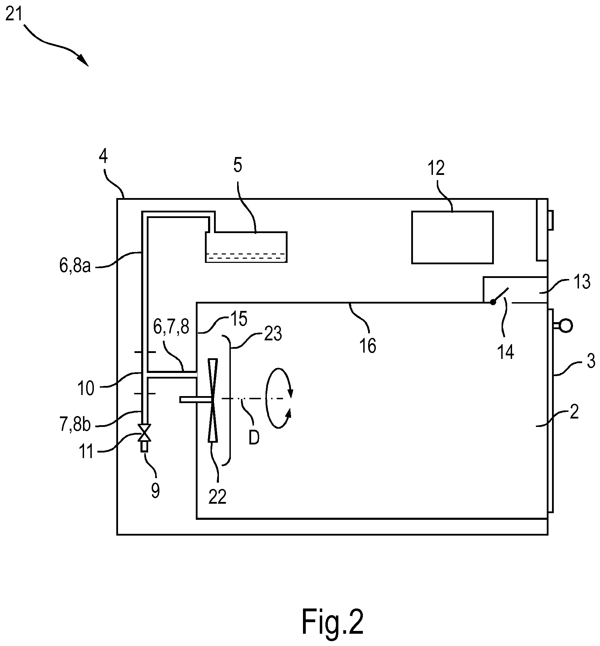

Fig.2 zeigt als Schnittdarstellung in Seitenansicht eine Skizze eines Haushaltsgargeräts 21 gemäß einem zweiten Ausführungsbeispiel. Das Haushaltsgargerät 21 unterscheidet sich von dem Haushaltsgargerät 1 dadurch, dass es ein in dem Garraum 2 befindliches Umluftgebläse 22 aufweist. Das Umluftgebläse 22 kann dazu verwendet werden, Luft in dem Garraum umzuwälzen, insbesondere in Zusammenarbeit mit einer das Umluftgebläse 22 umgebenden Ringheizung (o. Abb.) und eine Heißluftfunktionalität bereitzustellen. Das Umluftgebläse 22 und - falls vorhanden - die Ringheizung vorderseitig von einer Prallwand 23 abgedeckt.

Der Endabschnitt 8 mündet hinter dem Umluftgebläse 22 in den Garraum 2, so dass bei einer Drehung des Umluftgebläses 22 um eine Drehachse D eine zusätzliche Sogwirkung an der Mündung des Endabschnitts 8 erzeugt wird, mittels der ein Strömungsvolumen durch den Endabschnitt 8 - und damit z.B. auch durch die Frischluftleitung 7 - erhöht werden kann.

In einer Variante weist das Umluftgebläse 22 eine änderbare Drehrichtung auf (wie durch den gekrümmten Doppelpfeil angedeutet). Dadurch kann an der Mündung des Endabschnitts 8 durch Einstellung der Drehrichtung wahlweise ein Sog oder ein Druck erzeugt werden. Das Umluftgebläse 22 ist also in einer ersten Drehrichtung drehbar, um das in dem Endabschnitt 8 - insbesondere so auch in der Frischluftleitung 7 - befindliche gasförmige Medium in den Garraum 2 einzusaugen. Es ist in einer zweiten, umgekehrten Drehrichtung drehbar, um in dem Garraum 2 befindliches gasförmiges Medium in den Endabschnitt 8 - insbesondere auch in die Frischluftleitung 7 - einzudrücken. So wird die Möglichkeit eröffnet, gasförmiges Medium (Heißluft, Dampf D, Wrasen W usw.) durch die Frischluftleitung 7 abzulassen. Dadurch wiederum kann eine Wirkung des Wrasenabzugs 13 verstärkt werden oder sogar ganz auf den Wrasenabzug 13 verzichtet werden, insbesondere falls die dann als Medienaustrittsöffnung dienende Frischluftzuführöffnung 9 einer Mündung in dem Gehäuse 4 entspricht und so das Medium nicht in das Haushaltsgargerät 1 ausgestoßen wird.

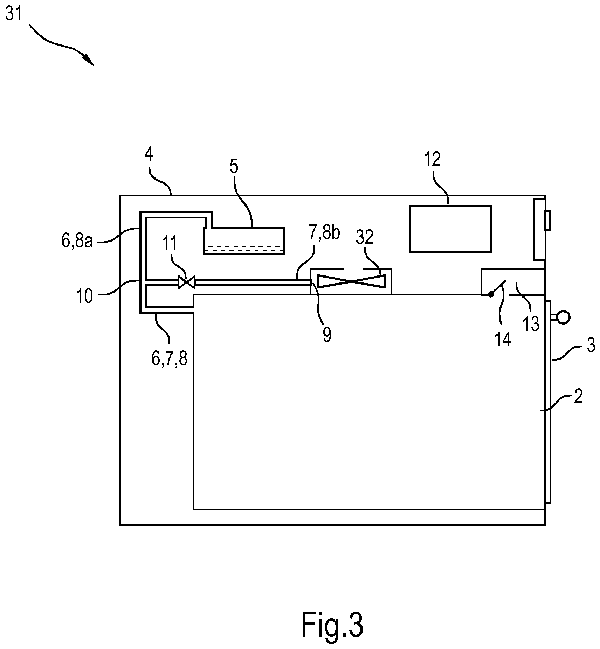

Fig.3 zeigt als Schnittdarstellung in Seitenansicht eine Skizze eines Haushaltsgargeräts 31 gemäß einem dritten Ausführungsbeispiel. Das Haushaltsgargerät 31 unterscheidet sich von dem Haushaltsgargerät 1 dadurch, dass es ein sich außerhalb des Garraum 2 befindliches Kühlgebläse 32 aufweist. Das Kühlgebläse 32 kann z.B. zum Kühlen einer Elektronik (z.B. der Steuereinrichtung 12) vorgesehen sein und z.B. während eines Betriebs des Haushaltsgargeräts 31 dauernd laufen. Das Kühlgebläse 32 - z.B. ein Radiallüfter- ist mit der Frischluftzuführöffnung 9 so verbunden, dass es Frischluft F in die Frischluftzuführöffnung 9 drückt. So wird ein besonders hoher Volumenstrom der Frischluft F in der Frischluftleitung 7 erreicht.

Das Haushaltsgargerät 31 kann in einer Variante ein Umluftgebläse 22 aufweisen.

In allen Haushaltsgargeräten 1, 21 und 31 ist der Dampferzeuger 5 mit der Frischluftleitung 7 gastechnisch verbindbar. So kann Frischluft F in den ersten Zweig 8a der Dampfzuführleitung 6 und ggf. auch in den Dampferzeuger 5 eingeleitet werden, wenn der Dampferzeuger 5 nicht in Betrieb bzw. deaktiviert ist. Dadurch können der erste Zweig 8a und der Dampferzeuger 5 getrocknet werden, was deren Lebensdauer verlängert.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Haushaltsgargerät
- 2: Garraum
- 3: Tür
- 4: Gehäuse
- 5: Dampferzeuger
- 6: Dampfzuführleitung
- 7: Frischluftleitung
- 8: Endabschnitt
- 8a: Erster Zweig
- 8b: Zweiter Zweig
- 9: Frischluftzuführöffnung
- 10: T-Stück
- 11: Absperrrventil
- 12: Steuereinrichtung
- 13: Wrasenabzug
- 14: Wrasenklappe
- 15: Rückwand
- 16: Decke
- 21: Haushaltsgargerät
- 22: Umluftgebläse
- 23: Prallwand
- 31: Haushaltsgargerät
- 32: Kühlgebläse
- D: Dampf
- F: Frischluft
- W: Wrasen

## Patentansprüche

1. Haushaltsgargerät (1; 21; 31), aufweisend
- einen Garraum (2),
- einen außerhalb des Garraums (2) befindlichen Dampferzeuger (5), der über eine Dampfzuführleitung (6) mit dem Garraum (2) verbunden ist, und
- eine zu dem Garraum (2) führende Frischluftleitung (7), die mittels eines Absperrelements absperrbar ist,
**dadurch gekennzeichnet, dass**
- die Dampfzuführleitung (6) und die Frischluftleitung (7) einen gemeinsamen, in den Garraum (2) mündenden Endabschnitt (8) aufweisen, von dem ein erster Zweig (8a) der Dampfzuführleitung (6) zu dem Dampferzeuger (5) abzweigt und ein zweiter Zweig (8b) der Frischluftleitung (7) zu einer Öffnung Frischluftzuführöffnung abzweigt.

2. Haushaltsgargerät (1) nach Anspruch 1, **dadurch gekennzeichnet, dass** die Frischluftleitung (7) gebläselos ist.

3. Haushaltsgargerät (21; 31) nach Anspruch 1, **dadurch gekennzeichnet, dass** es ein Gebläse (22; 32) zum Bewegen eines gasförmigem Mediums (F, D, W) in der Frischluftleitung (7) aufweist und das Gebläse (22; 32)
- in einer ersten Drehrichtung drehbar ist, um das in der Frischluftleitung (7) befindliche Medium (F) in den Garraum (2) einzubringen und
- in einer zweiten Drehrichtung drehbar ist, um in dem Garraum (2) befindliches Medium (F, D, W) durch die Frischluftleitung (7) auszubringen.

4. Haushaltsgargerät (21) nach Anspruch 3, **dadurch gekennzeichnet, dass** das Gebläse ein in dem Garraum (2) befindliches Umluftgebläse (22) ist.

5. Haushaltsgargerät (21) nach Anspruch 4, **dadurch gekennzeichnet, dass** eine Drehzahl des Umluftgebläses (22) zur Steuerung und/oder Regelung eines Volumenstroms von durch die Frischluftleitung (7) bewegten Mediums variierbar ist.

6. Haushaltsgargerät (21) nach einem der Ansprüche 4 bis 5, **dadurch gekennzeichnet, dass** der Endabschnitt (8) bei Frontansicht in den Garraum (2) hinter dem Umluftgebläse (22) in den Garraum (2) mündet.

7. Haushaltsgargerät (31) nach Anspruch 3, **dadurch gekennzeichnet, dass** das Gebläse ein sich außerhalb des Garraums (2) befindliches Kühlgebläse (32) ist.

8. Haushaltsgargerät (1; 21; 31) nach einem der vorhergehenden Ansprüche, **dadurch gekennzeichnet, dass** das Absperrelement (11) ein Frischluft-Absperrelement ist und sich der Endabschnitt (8) zwischen dem Frischluft-Absperrelement (11) und dem Garraum (2) befindet.

9. Haushaltsgargerät (1; 21; 31) nach einem der vorhergehenden Ansprüche, **dadurch gekennzeichnet, dass** der Dampferzeuger (5) mit der Frischluftleitung (7) gastechnisch verbindbar ist.

10. Haushaltsgargerät nach einem der Ansprüche 1 bis 7, **dadurch gekennzeichnet, dass** mittels des Absperrelements wahlweise die Dampfzuführleitung oder die Frischluftleitung absperrbar sind.

11. Haushaltsgargerät (1; 21; 31) nach einem der vorhergehenden Ansprüche, **dadurch gekennzeichnet, dass** das Absperrelement (11) ein elektrisch schaltbares Absperrelement ist und mittels einer Steuereinrichtung (12) schaltbar ist.

12. Haushaltsgargerät (1; 21; 31) nach einem der vorhergehenden Ansprüche, **dadurch gekennzeichnet, dass** der Garraum (2) einen von der Dampfzuführleitung (6) und von der Frischluftleitung (7) durch den Garraum (2) getrennten Wrasenabzug (13) aufweist.

13. Haushaltsgargerät (1; 21; 31) nach einem der vorhergehenden Ansprüche, **dadurch gekennzeichnet, dass** der Endabschnitt (8) als ein Stutzen eines T-Stücks (10) ausgebildet ist.

14. Haushaltsgargerät (1; 21; 31) nach einem der vorhergehenden Ansprüche, **dadurch gekennzeichnet, dass** das Haushaltsgargerät (1; 21; 31) dazu eingerichtet ist, nach einem Garvorgang automatisch Frischluft (F) in den Garraum (2) einzubringen.

## Claims

1. Household cooking appliance (1; 21; 31), having:
- a cooking chamber (2),
- a steam generator (5), which is located outside the cooking chamber (2) and is connected to the cooking chamber (2) by way of a steam feed line (6), and
- a fresh air line (7), which leads to the cooking chamber (2) and can be shut off by means of a shut off element,
**characterised in that**
- the steam feed line (6) and the fresh air line (7) have a common end portion (8), which opens into the cooking chamber (2), from which a first branch (8a) of the steam feed line (6) branches to the steam generator (5) and a second branch (8b) of the fresh air line (7) branches to an opening fresh air supply opening.

2. Household cooking appliance (1) according to claim 1, **characterised in that** the fresh air line (7) is fanless.

3. Household cooking appliance (21; 31) according to claim 1, **characterised in that** it has a fan (22; 32) for moving a gaseous medium (F, D, W) in the fresh air line (7) and the fan (22; 32)
- can be rotated in a first rotation direction to introduce the medium (F) present in the fresh air line (7) into the cooking chamber (2) and
- can be rotated in a second rotation direction to remove medium (F, D, W) present in the cooking chamber (2) through the fresh air line (7).

4. Household cooking appliance (21) according to claim 3, **characterised in that** the fan is a circulating fan (22) present in the cooking chamber (2).

5. Household cooking appliance (21) according to claim 4, **characterised in that** a rotation speed of the circulating fan (22) can be varied to control and/or regulate a volumetric flow of medium moved through the fresh air line (7).

6. Household cooking appliance (21) according to one of claims 4 to 5, **characterised in that** the end portion (8) opens into the cooking chamber (2) behind the circulating fan (22) when viewed at the front of the cooking chamber (2).

7. Household cooking appliance (31) according to claim 3, **characterised in that** the fan is a cooling fan (32) located outside the cooking chamber (2).

8. Household cooking appliance (1; 21; 31) according to one of the preceding claims, **characterised in that** the shut off element (11) is a fresh air shut off element and the end portion (8) is located between the fresh air shut off element (11) and the cooking chamber (2).

9. Household cooking appliance (1; 21; 31) according to one of the preceding claims, **characterised in that** the steam generator (5) is connected to the fresh air line (7) for gas purposes.

10. Household cooking appliance according to one of claims 1 to 7, **characterised in that** the steam feed line or the fresh air line can optionally be shut off by means of the shut off element.

11. Household cooking appliance (1; 21; 31) according to one of the preceding claims, **characterised in that** the shut off element (11) is an electrically switchable shut off element and can be switched by means of a control facility (12).

12. Household cooking appliance (1; 21; 31) according to one of the preceding claims, **characterised in that** the cooking chamber (2) has a vapor extractor (13) separated from the steam feed line (6) and the fresh air line (7) by the cooking chamber (2).

13. Household cooking appliance (1; 21; 31) according to one of the preceding claims, **characterised in that** the end portion (8) is configured as a support of a T-piece (10).

14. Household cooking appliance (1; 21; 31) according to one of the preceding claims, **characterised in that** the household cooking appliance (1; 21; 31) is designed to introduce fresh air (F) into the cooking chamber (2) automatically after a cooking operation.

## Revendications

1. Appareil de cuisson ménager (1 ; 21 ; 31), présentant
- un espace de cuisson (2),
- un générateur de vapeur (5) se trouvant en dehors de l'espace de cuisson (2), relié à l'espace de cuisson (2) via une conduite d'alimentation en vapeur (6), et
- une conduite d'air frais (7) menant vers l'espace de cuisson (2), sectionnable au moyen d'un élément de sectionnement,
**caractérisé en ce que**
- la conduite d'alimentation en vapeur (6) et la conduite d'air frais (7) présentent une section terminale (8) débouchant conjointement dans l'espace de cuisson (2), dont une première branche (8a) de la conduite d'alimentation en vapeur (6) bifurque vers le générateur de vapeur (5) et une deuxième branche (8b) de la conduite d'air frais (7) bifurque vers un orifice d'alimentation en air frais.

2. Appareil de cuisson ménager (1) selon la revendication 1, **caractérisé en ce que** la conduite d'air frais (7) est exempte de ventilateur.

3. Appareil de cuisson ménager (21 ; 31) selon la revendication 1, **caractérisé en ce qu'**il présente un ventilateur (22 ; 32) pour le déplacement d'un élément gazeux (F, D, W) dans la conduite d'air frais (7) et le ventilateur (22 ; 32)
- peut tourner dans un premier sens de rotation, afin d'introduire l'élément (F) se trouvant dans la conduite d'air frais (7) dans l'espace de cuisson (2) et
- peut tourner dans un deuxième sens de rotation, afin d'extraire l'élément (F, D, W) se trouvant dans l'espace de cuisson (2) à travers la conduite d'air frais (7).

4. Appareil de cuisson ménager (21) selon la revendication 3, **caractérisé en ce que** le ventilateur est un ventilateur à circulation d'air (22) se trouvant dans l'espace de cuisson (2).

5. Appareil de cuisson ménager (21) selon la revendication 4, **caractérisé en ce qu'**une vitesse de rotation du ventilateur à circulation d'air (22) est variable afin de commander et/ou de réguler un débit volumique du milieu déplacé à travers la conduite d'air frais (7).

6. Appareil de cuisson ménager (21) selon l'une des revendications 4 à 5, **caractérisé en ce que** la section terminale (8) débouche, en vue frontale dans l'espace de cuisson (2), derrière le ventilateur à circulation d'air (22) dans l'espace de cuisson (2).

7. Appareil de cuisson ménager (31) selon la revendication 3, **caractérisé en ce que** le ventilateur est un ventilateur de refroidissement (32) se trouvant à l'extérieur de l'espace de cuisson (2).

8. Appareil de cuisson ménager (1 ; 21 ; 31) selon l'une des revendications précédentes, **caractérisé en ce que** l'élément de sectionnement (11) est un élément de sectionnement à air frais et la section terminale (8) se trouve entre l'élément de sectionnement à air frais (11) et l'espace de cuisson (2).

9. Appareil de cuisson ménager (1 ; 21 ; 31) selon l'une des revendications précédentes, **caractérisé en ce que** le générateur de vapeur (5) peut être techniquement relié à la conduite d'air frais (7).

10. Appareil de cuisson ménager selon l'une des revendications 1 à 7, **caractérisé en ce que** l'élément de sectionnement permet de sectionner au choix la conduite d'alimentation en vapeur ou la conduite d'air frais.

11. Appareil de cuisson ménager (1 ; 21 ; 31) selon l'une des revendications précédentes, **caractérisé en ce que** l'élément de sectionnement (11) est un élément de sectionnement commutable électriquement et peut être commuté au moyen d'un dispositif de commande (12).

12. Appareil de cuisson ménager (1 ; 21 ; 31) selon l'une des revendications précédentes, **caractérisé en ce que** l'espace de cuisson (2) présente une extraction des vapeurs (13) séparée de la conduite d'alimentation en vapeur (6) et de la conduite d'air frais (7) par l'espace de cuisson (2).

13. Appareil de cuisson ménager (1 ; 21 ; 31) selon l'une des revendications précédentes, **caractérisé en ce que** la section terminale (8) est formée sous la forme d'un manchon d'une pièce en T (10).

14. Appareil de cuisson ménager (1 ; 21 ; 31) selon l'une des revendications précédentes, **caractérisé en ce que** l'appareil de cuisson ménager (1 ; 21 ; 31) est aménagé afin d'introduire automatiquement de l'air frais (F) dans l'espace de cuisson (2) après un processus de cuisson.
